Europäisches Patentamt

European Patent Office

Office européen des brevets

(11) Numéro de publication: **0 384 346**

**A1**

## (12) DEMANDE DE BREVET EUROPEEN

(21) Numéro de dépôt: **90103134.4**

(51) Int. Cl.⁵: **H01H 33/16**

(22) Date de dépôt: **19.02.90**

(30) Priorité: **24.02.89 FR 8902408**

(43) Date de publication de la demande:
**29.08.90 Bulletin 90/35**

(84) Etats contractants désignés:
**AT BE CH DE DK ES FR GB GR IT LI LU NL SE**

(71) Demandeur: **GEC ALSTHOM SA**
**38, avenue Kléber**
**F-75116 Paris(FR)**

(72) Inventeur: **Pham, Van Doan**
**8, impasse Magendie**
**F-69330 Meyzieu(FR)**

Inventeur: **Collet, Michel**
**25, rue de France**
**F-69100 Villeurbanne(FR)**
Inventeur: **Bekhaled, Mohamed**
**62, rue des Vignes**
**F-90800 Bavilliers(FR)**
Inventeur: **Fevrier, Alain**
**25, avenue du Parisis**
**F-78310 Maurepas(FR)**

(74) Mandataire: **Weinmiller, Jürgen et al**
**Lennéstrasse 9 Postfach 24**
**D-8133 Feldafing(DE)**

(54) Dispositif de coupure pour courant continu à haute tension.

(57) L'invention concerne un dispositif de coupure pour courant continu à haute tension.

Elle a pour objet un dispositif de coupure pour courant continu caractérisé en ce qu'il comprend un cryostat à l'intérieur duquel sont disposés deux enroulements supraconducteurs (7, 8) reliés deux à deux dans chacune des deux traversées (3, 4) du cryostat qui constituent des bornes du dispositif, et un ensemble connecté auxdites bornes et comprenant en série un condensateur (C) et un interrupteur (IF), le point commun au condensateur et audit interrupteur étant mis à la terre par une résistance (R).

Application à la coupure des lignes à courant continu à haute tension.

FIG.1

# DISPOSITIF DE COUPURE POUR COURANT CONTINU A HAUTE TENSION

La présente invention est relative à un dispositif de coupure pour courant continu à haute tension.

La méthode classique pour couper le courant continu sous haute et très haute tension consiste à créer un passage à zéro artificiel du courant au moyen d'un courant de décharge oscillatoire de sens opposé. Ce courant de décharge est obtenu par exemple à partir d'un condensateur préalablement chargé ( voir par exemple: Development of HVDC Circuit Breaker and its interrupting, IEEE 81 SM 473-8, Portland, Oregon). On notera que plus le courant de défaut à couper est élevé, plus grande doit être la puissance du condensateur utilisé.

Il a été proposé de couper un courant continu en faisant passer celui-ci à travers un élément supraconducteur et en provoquant la transition dudit élément de l'état supraconducteur à l'état non supraconducteur, soit par élévation de la température dudit élément au-dessus de sa température critique, soit en amenant le champ magnétique à une valeur supérieure à celle du champ critique dudit élément (voir la demande de brevet français N° 87 14 128 du 13 octobre 1987). Cette solution convient bien pour la coupure des courants élevés car il est très facile alors d'atteindre les seuils critiques de courant ou de champ. Mais cette solution convient mal à la coupure des courants nominaux ou inférieurs aux valeurs nominales.

On a proposé, pour la coupure des courants de valeur inférieure à la valeur critique, d'utiliser les transitions successives de plusieurs fils supraconducteurs placés en parallèle (voir la demande de brevet français N° 88 11865 du 12 septembre 1988). Cette solution ne couvre pas toute la gamme de courant, et ne convient pas bien pour la coupure des courants faibles ou moyennement faibles.

Un but de la présente invention est de réaliser un disjoncteur à courant continu à haute tension permettant l'interruption du courant continu de n'importe quelle valeur.

L'invention est fondée sur une combinaison de la technique classique utilisant la décharge d'un condensateur et la technique faisant appel à la supraconductivité.

L'invention a pour objet un dispositif de coupure pour courant continu à haute tension, destiné à être inséré dans une ligne à courant continu dotée d'un disjoncteur classique de faible pouvoir de coupure, caractérisé en ce qu'il comprend un cryostat possédant une première et une seconde traversées comprenant chacune deux amenées de courant reliées deux à deux à l'intérieur du cryostat par un premier et un second enroulements supraconducteurs bobinés en sens inverse l'un de l'autre, les sorties des première et deuxième traversées constituant des bornes du dispositif de coupure, lesdites bornes étant reliées, à l'extérieur dudit cryostat, par un ensemble comprenant en série un condensateur et un interrupteur à fonctionnement rapide, le point commun audit condensateur et audit interrupteur étant mis à la terre par une résistance de grande valeur ohmique, un moyen étant prévu pour limiter la surtension et pour absorber l'énergie électro-magnétique lors de la transition desdits enroulements supraconducteurs.

En variante, le dispositif de coupure de l'invention comprend un cryostat comprenant une première, une seconde et une troisième traversée possédant chacune deux amenées de courant, les première et deuxième traversées étant reliées par un premier et un second enroulements supraconducteurs, les seconde et troisième traversées étant reliées par un troisième et un quatrième enroulements supraconducteurs, les troisième et quatrième enroulements supraconducteurs ayant des valeurs de courant critique légèrement supérieures à la valeur du courant résiduel des premier et second enroulements supraconducteurs lorsque ceux-ci sont à l'état non supraconducteur, les premier et deuxième traversées étant reliées, à l'extérieur dudit cryostat, par un ensemble comprenant en série un condensateur et un interrupteur à fonctionnement rapide, le point commun audit condensateur et audit interrupteur étant mis à la terre par une résistance de grande valeur ohmique, les deuxième et troisième traversées étant reliées, à l'extérieur dudit cryostat, par un sectionneur, les troisième et quatrième enroulements supraconducteurs étant reliés entre eux, à la sortie de ladite troisième traversée, en un point constituant l'une des bornes dudit dispositif de coupure, l'autre borne étant la sortie de ladite première traversée, un moyen étant prévu pour faire transiter successivement à l'état non supraconducteur lesdits troisième et quatrième enroulements supraconducteurs lorsque ceux-ci sont parcourus par le courant résiduel desdits premier et second enroulements supraconducteurs, un moyen étant prévu pour limiter la surtension lors de la transition desdits enroulements supraconducteurs.

Dans un premier mode de réalisation, ledit moyen pour faire transiter successivement lesdits troisième et quatrième enroulements supraconducteurs sont constitués par un interrupteur connecté en série avec le quatrième enroulement et shunté par une résistance.

En variante, ledit moyen consiste à associer à chacun desdits troisième et quatrième enroulements une résistance électrique, lesdites résistances ayant des variations différentes d'échauffement par effet Joule.

Avantageusement, le moyen pour limiter la surtension lors des transitions des enroulements supraconducteurs est une varistance connectée aux bornes dudit dispositif.

L'invention sera bien comprise par la description donnée ci-après de deux modes de réalisation de l'invention, en référence au dessin annexé dans lequel:

la figure 1 est une vue schématique d'un disjoncteur selon un premier mode de réalisation de l'invention,

la figure 2 est un diagramme expliquant le fonctionnement du disjoncteur de l'invention,

la figure 3 est une vue schématique d'un disjoncteur selon une variante de réalisation de l'invention.

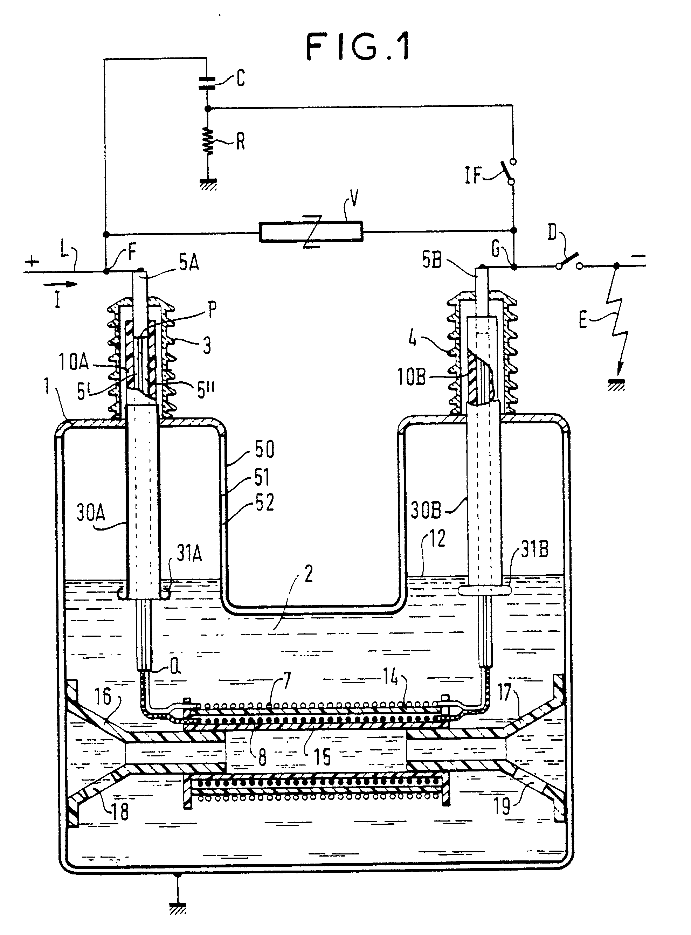

Dans la figure 1, la référence 1 désigne un cryostat métallique constitué de deux parois 50 et 51 séparés par un espace 52 maintenu sous vide. Le cryostat est partiellement rempli d'un fluide 2 à une température permettant a l'enroulement utilisé de prendre l'état supraconducteur. Dans le cas où l'enroulement est réalisé en fil de niobium-titane, le fluide utilisé est de l'hélium liquide.

La cuve est surmontée de deux traversées isolantes 3 et 4 à travers lesquelles passent des conducteurs 5A et 5B respectivement munis chacun d'une gaine isolante 10A, 10B.

A la partie supérieure des traversées, où règne une température proche de l'ambiante, le conducteur 5A, 5B est en cuivre massif.

On ne décrira maintenant que la partie gauche du cryostat (côté source ou amont de la ligne) puisque le côté droit (côté utilisation ou aval de la ligne) est identique. Les parties gauches sont indiquées avec l'index A et les parties droites avec l'index B.

Le cryostat est inséré dans la ligne L à couper entre un point F (relié à la traversée 3) et un point G (relié à la traversée 4). Un disjoncteur D, de faible pouvoir de coupure, est inséré en série dans la ligne du côté utilisation.

Au dessous d'un point P, situé au-dessus de la cuve, le conducteur 5A est fendu sur toute sa longueur en deux parties égales 5′ et 5″, jusqu'à un point Q dans la partie liquide du fluide. Les parties 5′ et 5″ sont isolées entre elles et entourées par une gaine isolante 10A, revêtue, à l'intérieur du cryostat, par une couche conductrice 30A reliée au potentiel de la cuve. L'extrémité de cette couche 30A est reliée électriquement à un anneau de garde 31A, placé dans la partie liquide.

Les conducteurs 5′ et 5″ sont respectivement reliés à des conducteurs en matériau supraconducteur 7 et 8, enroulés respectivement autour de deux manchons isolants cylindriques coaxiaux 14 et 15, maintenus par des supports isolants 16 et 17 fixés à la cuve. Des trous 18 et 19 dans les supports permettent la circulation du liquide cryogénique à l'intérieur des manchons.

Le bobinage des deux fils 7 et 8 sur leur manchon respectif est effectué en sens inverse pour annuler la valeur de l'auto-inductance de l'ensemble.

Aux bornes du cryostat est disposé un circuit comprenant, reliés en série, un condensateur C et un interrupteur IF à fermeture rapide. Le point commun au condensateur C et à l'interrupteur IF est relié à la terre par une résistance R de grande valeur ohmique.

Une résistance à valeur variable avec la tension à ses bornes, telle qu'une varistance V, est connectée entre les bornes du cryostat.

Le fonctionnement du dispositif est le suivant:
- en fonctionnement normal de la ligne, le disjoncteur D est fermé et l'interrupteur IF est ouvert. Le condensateur C est ainsi chargé en permanence par la ligne côté amont à travers la résistance R.
- lors d'un défaut, symbolisé dans la figure par la ligne brisée E, le courant I dans la ligne augmente rapidement et atteint très vite la valeur critique $I_c$, provoquant la transition des enroulements 7 et 8 qui deviennent fortement résistifs. Il se produit alors une surtension et le fonctionnement de la varistance V. Une grande partie de l'énergie électro-magnétique est absorbée par la varistance V. Le courant résiduel dans les enroulements est aisément coupé par le disjoncteur D. La décharge du condensateur n'est pas nécessaire dans ce cas et n'intervient pas. La ligne est protégée immédiatement sans nécessité d'une détection rapide du défaut.
- pour les défauts entraînant un courant d'intensité inférieure à la valeur critique $I_c$, et pour la coupure d'un courant de charge ayant une valeur inférieure ou égale à la valeur $I_n$ du courant nominal, on ferme l'interrupteur IF. Cette fermeture entraîne la décharge du condensateur C à travers les enroulements supraconducteurs, ce qui produit un courant additionnel qui vient s'ajouter au courant à couper; de la sorte, le courant dans les enroulements atteint une valeur légèrement supérieure à la valeur critique, ce qui produit la transition des enroulements vers l'état résistif. Le courant résiduel dans les enroulements est aisément coupé par le disjoncteur D.

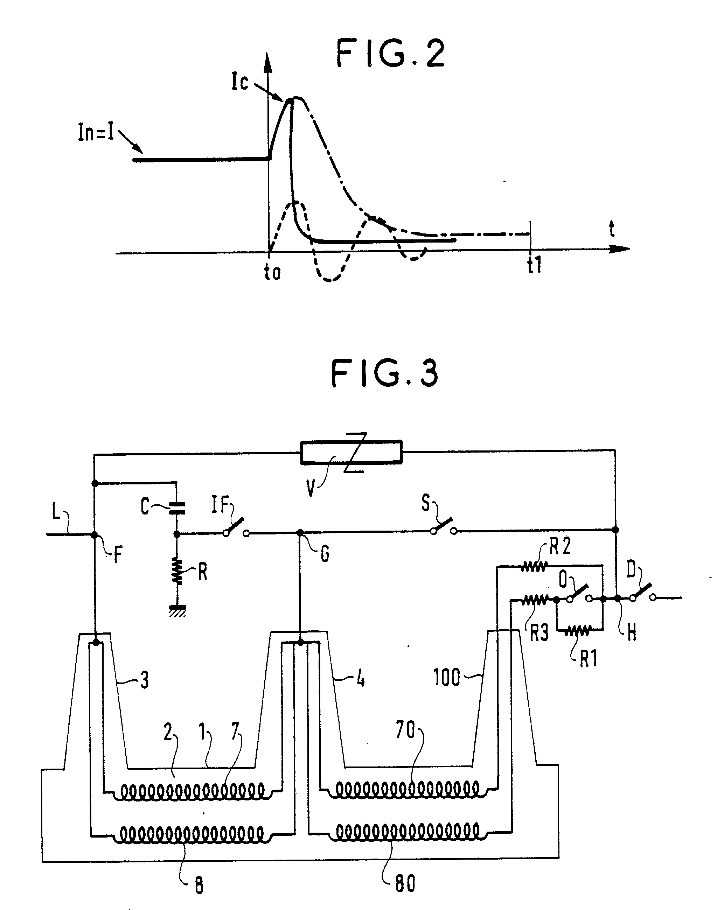

La figure 2 est un diagramme montrant, en trait plein, l'allure du courant dans les enroulements supraconducteurs avant et après la fermeture de l'interrupteur IF, qui est réalisée au temps to; on a représenté en tiretés l'allure qu'aurait le courant de décharge du condensateur si la transition n'intervenait pas. On voit que la partie ascendante de la première demi-pseudo période vient s'ajouter au courant à couper dont la valeur peut de la sorte atteindre la valeur critique.

En trait mixte est représenté le courant total traversant le disjoncteur D après le fonctionnement de la varistance V. Le temps t1 est l'instant de coupure du courant résiduel par le disjoncteur D.

A titre d'exemple, si le courant nominal In est de 2000 ampères, on peut adopter une valeur du courant critique Ic égale à 3000 ampères, soit 1,5 In. Dans ce cas, le dispositif peut fonctionner avec un courant de décharge de 1000 ampères pour la première valeur de crête, ce qui est parfaitement réalisable avec un condensateur de puissance faible. Pour couper un courant inférieur au courant nominal, il faudra augmenter l' intensité du courant de décharge pour atteindre le courant critique Ic.

Pour éviter l'échauffement du fil supraconducteur après la transition, on ouvrira le disjoncteur D le plus vite possible, puis on ouvrira l'interrupteur IF.

Après le régime transitoire, à la tension rétablie sur les enroulements, la varistance retourne à son état normal et ne conduit plus qu'un courant de suite très faible. Le disjoncteur a un pouvoir de coupure calculé pour couper le courant résiduel résistif circulant dans les enroulements augmenté du courant de suite dans la varistance.

Dans le cas où le circuit à couper a un courant de valeur nominale In très importante, le courant résiduel est d'autant plus faible que la longueur des fils supraconducteurs est plus grande; on est donc conduit, soit à réaliser des enroulements supraconducteurs très importants, soit à prévoir un disjoncteur D de pouvoir de coupure relativement important. Pour éviter cela, et garder des enroulements supraconducteurs de taille raisonnable et un disjoncteur auxiliaire de pouvoir de coupure faible, on modifie le dispositif précédemment décrit comme indiqué maintenant en référence à la figure 3.

Dans la figure 3, qui est plus schématique que la figure 1, les éléments communs ont reçu les mêmes numéros de référence. Le cryostat 1 comprend une troisième traversée référencée 100 par laquelle sortent les fils de liaison de deux enroulements supraconducteurs 70 et 80 disposés comme les enroulements 7 et 8. Ces enroulements sont reliés d'un côté au point G à l'extrémité de la traversée 4 et, de l'autre coté, à un point H de la ligne par l'intermédiaire, sur l'enroulement 80, d'un interrupteur O shunté par une résistance R1 et, éventuellement, sur chacune des branches 70 et 80, respectivement de deux résistances R2 et R3 ayant des valeurs initiales faibles et égales. Le disjoncteur D est placé en aval du point H; la varistance V est placée entre les traversées 3 et 100; un sectionneur S relie les points G et H.

Par hypothèse, les enroulements 70 et 80 ont une section plus faible que les enroulements 7 et 8 et donc une valeur du courant critique plus faible, un courant nominal plus faible et une valeur de résistance à l'état non supraconducteur plus élevée. La valeur du courant critique des enroulements 70 et 80 est choisie pour être légèrement supérieure au courant résiduel des enroulements 7 et 8 lorsque ces derniers ont transité à l'état non supraconducteur.

Le fonctionnement du dispositif est le suivant:
- en régime de fonctionnement de la ligne, les appareils S et D ainsi que l'interrupteur O sont fermés. Le courant nominal In, de grande valeur, traverse les enroulements 7 et 8, le sectionneur S et le disjoncteur D. En cas de défaut, les enroulements 7 et 8 transitent à l'état non supraconducteur, comme il a été expliqué en référence à la figure 1. On provoque alors l'ouverture du sectionneur S. Le courant résiduel traverse alors les enroulements 70 et 80; on ouvre alors l'interrupteur O ; la valeur de la résistance de la branche 80 augmente à cause de la résistance d'arc, ce qui provoque le trasfert de tout le courant résiduel dans l'enroulement 70 et la transition à l'état non supraconducteur de ce dernier, suivie du transfert de la totalité du courant résiduel précité sur l'enroulement 80 qui transite à son tour à l'état non supraconducteur. On a introduit de la sorte une résistance de forte valeur dans la ligne, ce qui réduit fortement le courant résiduel que le disjoncteur D est alors apte à couper sans avoir un fort pouvoir de coupure. On note que la varistance V limite aussi la surtension occasionnée par la transition de l'enroulement 80, après celle des enroulements 7 et 8.

On peut, en variante, supprimer l'interrupteur O et sa résistance associée R1 en utilisant deux résistances R2 et R3 à faible valeur ohmique et à comportement thermique différent, l'une s'échauffant plus vite que l'autre lorsque ces résistances sont traversées par le courant résiduel après la transition à l'état non supraconducteur des enroulements 7 et 8, afin de créer un transfert successif de ce courant dans les enroulements 70 et 80.

Les disjoncteurs à courant continu selon l'invention, dont plusieurs modes de réalisation viennent d'être décrits, permettent de couper les courants continus quelle que soit leur intensité. Par ailleurs, ils présentent les deux avantages suivants par rapport aux disjoncteurs de type connu:
- ils permettent de limiter le courant de défaut de grande amplitude en un temps très court, de l'ordre de la milliseconde au lieu d'une cinquantaine de millisecondes, voire plus, dans l'art antérieur.
- ils permettent de limiter l'amplitude du courant de défaut à celle de la valeur critique Ic d'un enroulement supraconducteur, typiquement 1,5 fois la valeur du courant nominal. Les disjoncteurs classiques n'offrent pas de possibilité de limiter le courant de sorte que la grande amplitude de courant passe sur le réseau.

## Revendications

1/ Dispositif de coupure pour courant continu à haute tension, destiné à être inséré dans une ligne (L) à courant continu dotée d'un disjoncteur classique (D) de faible pouvoir de coupure, caractérisé en ce qu'il comprend un cryostat (1) possédant une première (3) et une seconde (4) traversées comprenant chacune deux amenées de courant (5',5") reliées deux à deux à l'intérieur du cryostat par un premier (7) et un second (8) enroulements supraconducteurs bobinés en sens inverse l'un de l'autre, les sorties des première (3) et seconde (4) traversées constituant des bornes dudit dispositif de coupure, lesdites bornes étant reliées, à l'extérieur dudit cryostat, par un ensemble comprenant en série un condensateur (C) et un interrupteur (IF) à fonctionnement rapide, le point commun audit condensateur et audit interrupteur étant mis à la terre par une résistance (R) de grande valeur ohmique, un moyen (V) étant prévu pour limiter la surtension lors de la transition desdits éléments supraconducteurs.

2/ Dispositif de coupure pour courant continu à haute tension, destiné à être inséré dans une ligne (L) à courant continu dotée d'un disjoncteur classique (D) à faible pouvoir de coupure, caractérisé en ce qu'il comprend un cryostat (1) comprenant une première (3), une seconde (4) et une troisième (100) traversées possédant chacune deux amenées de courant, les première (3) et seconde (4) traversées étant reliées par un premier (7) et un second (8) enroulements supraconducteurs, les seconde (4) et troisième (100) traversées étant reliées par un troisième (70) et un quatrième (80) enroulements supraconducteurs, les troisième (70) et quatrième (80) enroulements ayant des valeurs de courant critique légèrement supérieures à la valeur du courant résiduel dans les premier (7) et second (8) enroulements lorsque ceux-ci sont à l'état non supraconducteur, les première (3) et seconde (4) traversées étant reliées, à l'extérieur dudit cryostat, par un ensemble comprenant en série un condensateur (C) et un interrupteur (IF) à fonctionnement rapide, le point commun audit condensateur et audit interrupteur étant mis à la terre par une résistance (R) de grande valeur ohmique, les seconde (4) et troisième (100) traversées étant reliées, à l'extérieur dudit cryostat par un sectionneur (S), les troisième (70) et quatrième (80) enroulements supraconducteurs étant reliés entre eux, à la sortie de ladite troisième (100) traversée en un point (H) constituant une borne de sortie dudit dispositif de coupure, l'autre borne étant la sortie de ladite première traversé&e (3), un moyen (O, R1, R2, R3)) étant prévu pour faire transiter successivement à l'état non supraconducteur les troisième (70) et quatrième (80) enroulements supraconducteurs lorsque ceux-ci sont parcourus par le courant résiduel des premier (7) et second (8) enroulements supraconducteurs après transition de ces derniers, un moyen (V) étant prévu pour limiter la surtension lors de la transition des enroulements supraconducteurs.

3/ Dispositif de coupure selon la revendication 2, caractérisé en ce que le moyen pour faire transiter successivement les troisième (70) et quatrième (80) enroulements supraconducteurs est constitué part un interrupteur (O) connecté en série avec le quatrième (80) enroulement supraconducteur et shunté par une résistance (R1).

4/ Dispositif de coupure selon la revendication 2, caractérisé en ce que le moyen pour faire transiter successivement les troisième (70) et quatrième (80) enroulements consiste à associer à chacun desdits enroulements une résistance électrique (R2, R3), lesdites résistances ayant des valeurs initiales faibles et des variations différentes d'échauffement par effet Joule.

5/ Dispositif de coupure selon l'une des revendications 1 à 4, caractérisé en ce que le moyen pour limiter les surtensions lors des transitions des enroulements supraconducteurs (7, 8, 70, 80) est une varistance (V) connectée aux bornes du dispositif.

6/ Dispositif de coupure selon l'une des revendications 1 à 5, caractérisé en ce que la capacité du condensateur (C) est déterminée en fonction du courant de décharge permettant d'atteindre le courant critique desdits premier et second enroulements supraconducteurs (7, 8).

# FIG.1

# FIG.2

# FIG.3

Office européen
des brevets

# RAPPORT DE RECHERCHE EUROPEENNE

Numero de la demande

EP    90 10 3134

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2105430 (CGE) <br> * revendication 1; figure 1 * <br> --- | 1 | H01H33/16 |
| A | CH-A-495074 (SIEMENS) <br> * figures 1, 4 * <br> --- | 1 | |
| A | US-A-3704391 (ITE) <br> --- | | |
| A | US-A-3736439 (SIEMENS) <br> ----- | | |

DOMAINES TECHNIQUES
RECHERCHES (Int. Cl.5 )

H01H
H02H
H01L

Le présent rapport a été établi pour toutes les revendications

| Lieu de la recherche | Date d'achèvement de la recherche | Examinateur |
|---|---|---|
| LA HAYE | 02 AVRIL 1990 | JANSSENS DE VROOM P |